# EUROPEAN PATENT APPLICATION

(11) **EP 3 418 162 A1**
(43) Date of publication of application: **26.12.2018**
(21) Application number: 18178080.0
(22) Date of filing: 15.06.2018
(51) Int. Cl.: B62D 15/02, G05D 1/02

(54) **AUTOMATED VEHICLE LANE-KEEPING SYSTEM**

(30) Priority: 19.06.2017 US 201715626666
(71) Applicant: Aptiv Technologies Limited, St. Michael (BB)
(72) Inventor: SMITH, Matthew R., SPRINGBORO, OHIO 45066 (US); KOSIAK, Walter K., KOKOMO, INDIANA 46902 (US)
(74) Representative: Robert, Vincent

(57) **Abstract**

A lane-keeping system (10) for an automated vehicle includes a lane-detector (24), an object-detector (28), and a controller (30). The lane-detector (24) indicates which lane of a roadway (26) is occupied by a host-vehicle (12). The object-detector (28) detects objects (20) proximate to the host-vehicle (12). The controller (30) is in communication with the lane-detector (24) and the object-detector (28). The controller (30) is configured to operate the host-vehicle (12) to follow a first-lane using the lane-detector (24) when no object is detected by the object-detector (28) in the first-lane that warrants a lane-change and no lane-change from the first-lane is initiated by an operator (18) of the host-vehicle (12), and allow a lane-change to a second-lane when initiated by the operator (18). The controller (30) is also configured to initiate a lane-change to the first-lane from the second-lane after a first-time-interval (44) after the lane-change to the second-lane that was initiated by the operator (18) when the first-lane is available for unimpeded travel by the host-vehicle (12) for greater than a second-time-interval (46).

## Description

### TECHNICAL FIELD OF INVENTION

This disclosure generally relates to a lane-keeping system for an automated vehicle, and more particularly relates to a system that initiates a lane-change to a first-lane from a second-lane after a first-time-interval after a lane-change to the second-lane that was initiated by an operator when the first-lane is available for unimpeded travel by the host-vehicle for greater than a second-time-interval.

### BACKGROUND OF INVENTION

It is known for an automated vehicle to autonomously change lanes to, for example, pass another vehicle. However, in some situations a passenger/operator of the automated-vehicle may want to change lanes for reasons unknown to the automated vehicle.

### SUMMARY OF THE INVENTION

Described herein is a lane-keeping system that provides for relatively long timers (e.g. 25 s) that are used to prevent autonomous lane-changes. For example, an operator/passenger may abort an autonomous lane-change by, for example, moving the hand-wheel (i.e. steering-wheel) or by operating a turn signal control lever in direction opposite of the direction of the autonomous lane-change. As a result, a suppression timer is started that temporarily suppresses lane-changes in the direction of the aborted lane-change. In another scenario, when the operator manually changes lanes or otherwise requests a lane-change, a suppression timer is started that temporarily prevents a lane-change back to the previous lane. It is also contemplated that when timers from either of these scenarios are active and a highway exit or highway split is within a given distance (e.g., 1 km) of a host-vehicle position (as identified using a digital map), in the direction of the requested or manually-executed lane-change, the timer is extended until the exit or highway split is passed.

In accordance with one embodiment, a lane-keeping system for an automated vehicle is provided. The system includes a lane-detector, an object-detector, and a controller. The lane-detector indicates which lane of a roadway is occupied by a host-vehicle. The object-detector detects objects proximate to the host-vehicle. The controller is in communication with the lane-detector and the object-detector. The controller is configured to operate the host-vehicle to follow a first-lane using the lane-detector when no object is detected by the object-detector in the first-lane that warrants a lane-change, and no lane-change from the first-lane is initiated by an operator of the host-vehicle. The controller is also configured to allow a lane-change to a second-lane when initiated by the operator. The controller is also configured to initiate a lane-change to the first-lane from the second-lane after a first-time-interval after the lane-change to the second-lane that was initiated by the operator when the first-lane is available for unimpeded travel by the host-vehicle for greater than a second-time-interval.

The controller may be further configured to remain in the second-lane after the first-time-interval when a roadway-divergence is located within a predefined-distance of the host-vehicle and until the roadway-divergence is passed by the host-vehicle. The controller may also be further configured to remain in the second-lane for a third-time-interval when the operator overrides the lane-change to the first-lane from the second-lane that was initiated by the controller. The controller may be further configured to remain in the second-lane after the third-time-interval when a roadway-divergence is located within a predefined-distance of the host-vehicle and until the roadway-divergence is passed by the host-vehicle. The controller may be further configured to initiate a lane-change to the second-lane when an object is detected by the object-detector in the first-lane that warrants a lane-change, and to remain in the first-lane for a fourth-time-interval when the operator overrides the lane-change to the second-lane that was initiated by the controller. The controller may be further configured to remain in the first-lane after the fourth-time-interval when a roadway-divergence is located within a predefined-distance of the host-vehicle and until the roadway-divergence is passed by the host-vehicle.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is a diagram of a lane-keeping system in accordance with one embodiment;
Fig. 2 is traffic-scenario encountered by the system of Fig. 1 in accordance with one embodiment; and
Fig. 3 is traffic-scenario encountered by the system of Fig. 1 in accordance with one embodiment.

### DETAILED DESCRIPTION

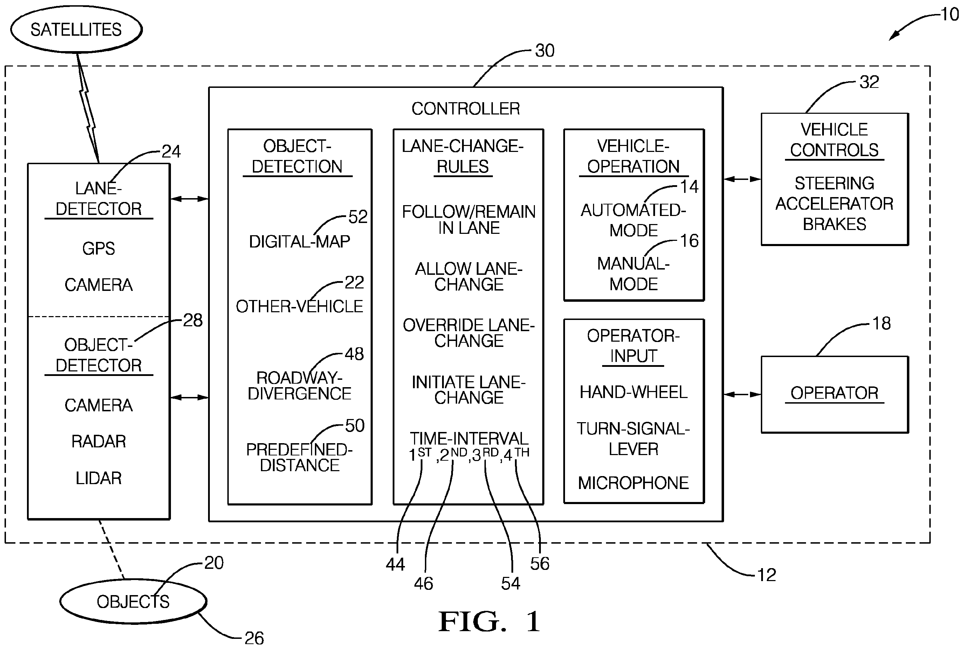

Fig. 1 illustrates a non-limiting example of a lane-keeping system 10, hereafter referred to as the system 10, which is generally for operating an automated vehicle, e.g. a host-vehicle 12. As used herein, the term automated vehicle may apply to instances when the host-vehicle 12 is being operated in an automated-mode 14, i.e. a fully autonomous mode, where an operator 18 (i.e. a human-operator/occupant/passenger) of the host-vehicle 12 may do little more than designate a destination in order to operate the host-vehicle 12. However, full automation is not a requirement. It is contemplated that the teachings presented herein are useful when the host-vehicle 12 is operated in a manual-mode 16 where the degree or level of automation may be little more than providing momentary assistance to the operator 18 who is generally in control of the steering, accelerator, and brakes of the host-vehicle 12. That is, the level of automation may be any level between full automation and very little automation. For example, the system 10 may merely assist the human-operator as needed to change lanes and/or avoid interference with and/or a collision with, for example, one or more instances of objects 20 such as an other-vehicle 22.

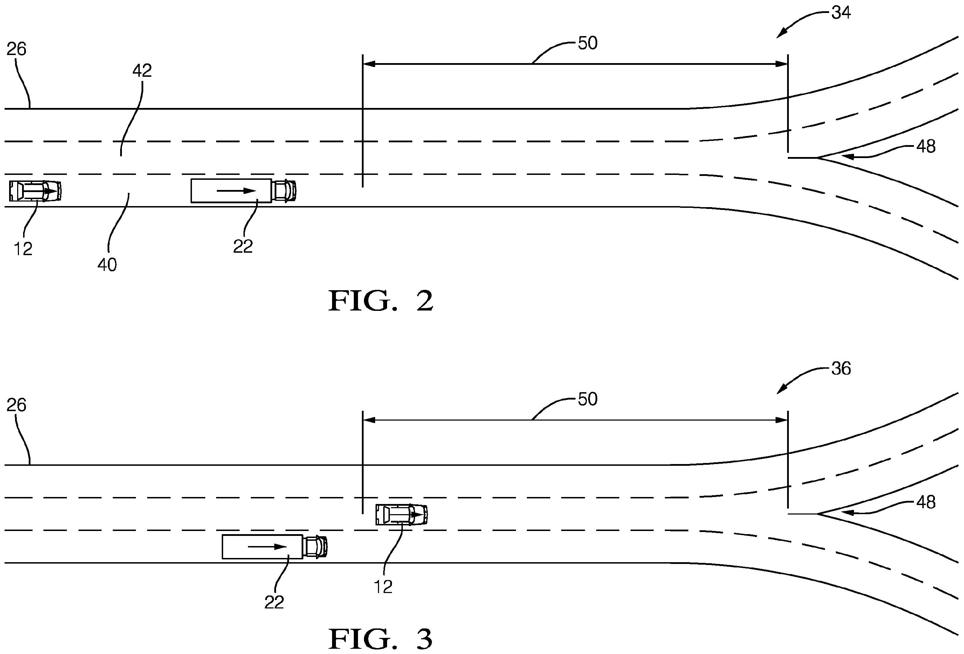

The system 10 includes a lane-detector 24 that indicates which lane of a roadway 26 (Figs. 2 and 3) is occupied by a host-vehicle 12. The lane-detector 24 may include or be formed of, but is not limited to, a camera, a lidar, a global-positioning-system (GPS), or combination thereof. The system 10 also includes an object-detector 28 that detects instances of the objects 20 proximate to the host-vehicle 12. The object-detector 28 may include or be formed of, but is not limited to, a camera, a lidar, a radar, or combination thereof. While someone might interpret Fig. 1 to suggest that the lane-detector 24 and the object-detector 28 are part of a unified assembly, this is not a requirement. That is, the various devices that make up the lane-detector 24 and the object-detector 28 may be mounted at multiple different spaced apart locations on the host-vehicle 12. However, it is contemplated that some of the devices may be shared by the lane-detector 24 and the object-detector 28. For example, the lane-detector 24 and the object-detector 28 may receive image data from the same instance of a camera. That is, it is not a requirement that the lane-detector 24 and the object-detector 28 each have their own camera as possibly suggested in Fig. 1.

The system 10 includes a controller 30 in communication with the lane-detector 24 and the object-detector 28. The communication may be by way of wires, optical-cable, or wireless communications. The controller 30 may include a processor (not specifically shown) such as a microprocessor or other control circuitry such as analog and/or digital control circuitry including an application specific integrated circuit (ASIC) for processing data as should be evident to those in the art. The controller 30 may include memory (not specifically shown), including non-volatile memory, such as electrically erasable programmable read-only memory (EEPROM) for storing one or more routines, thresholds, and captured data. The one or more routines may be executed by the processor to perform steps to determine the relative location of instances of the objects 20 based on signals received by the controller 30 from the lane-detector 24 and/or the object-detector 28 and to operate the host-vehicle via the vehicle-controls 32 as described herein.

In the examples presented herein it is generally presumed that the host-vehicle 12 will be operating in the automated-mode 14 where the controller 30 is generally in control of the steering, accelerator, and brakes of the host-vehicle 12. In certain circumstances the operator 18 of the host-vehicle may wish to initiate a lane-change or prevent the controller 30 from initiating/completing a lane-change. Various example scenarios of how the operator alters the operation of the host-vehicle 12 that is not consistent with the baseline programming of the controller 30 to operate the host-vehicle 12 in traffic will now be described.

Figs. 2 and 3 illustrate non-limiting examples of, respectively, a first-traffic-scenario 34 and a second-traffic-scenario 36 that will be useful to describe how the controller 30 may operate the host-vehicle 12 in certain situations. The first-traffic-scenario 34 and the second-traffic-scenario 36 both illustrate a three-lane road where all vehicles on the roadway 26 would be traveling in the same direction. That is, the roadway 26 may be half of divided highway, and an opposing-roadway and traffic traveling in the opposite direction is not shown. As a starting point for this description and in reference to Fig. 2, the controller 30 may be configured to operate the host-vehicle 12 to follow a first-lane 40 using the lane-detector 24 when no object is detected by the object-detector 28 in the first-lane 40 that warrants a lane-change, and no lane-change from the first-lane is initiated by an operator of the host-vehicle. That is, the host-vehicle will stay in the lane selected by the controller 30 or the operator 18 until a circumstance arises or occurs that warrants a lane-change by the controller 30.

As will be explained in more detail below, there are generally two circumstances that warrant a lane-change. The first being that there is something in the present lane of travel (e.g. the first-lane 40 in Fig. 2) that requires a lane-change to travel-around. For example, as suggested by Fig. 2, the host-vehicle 12 may be approaching or catching-up with the other-vehicle 22 because the other-vehicle 22 is traveling slower than the host-vehicle 12. In this circumstance the host-vehicle 12 would need to change lanes to pass and avoid a collision with the other-vehicle 22. The second circumstance being that the host-vehicle 12 is not presently traveling in a preferred-lane, where the preferred-lane may be designated by preprogramming of the controller 30 or selected by the operator 18. For example, as suggested by Fig. 3, the host-vehicle 12 may have just passed the other-vehicle 22 and the controller 30 may be configured to return to the preferred-lane if possible. It is contemplated that preprogramming of the controller 30 may have the right-most lane (the first-lane 40 in Fig. 2) designated as the preferred-lane, but the operator 18 may be able to re-designate the center-lane of the roadway 26 as the preferred lane, at least temporarily or for the duration of a trip.

Referring now to Fig. 2, the controller 30 may be further programmed or configured to allow a lane-change to a second-lane 42 when initiated by the operator 18. That the lane-change is allowed presumes that there is nothing already present the second-lane 42 that would be an issue such as a vehicle or motorcycle in the 'blind-spot' of the operator 18. The operator 18 may initiate the lane-change to the second-lane 42 by, for example but not limited to, operating a turn-signal-level (Fig. 1) of the host-vehicle 12, turning a hand-wheel (i.e. steering-wheel) of the host-vehicle 12, or speaking a voice-command that is detected by a microphone in the host-vehicle 12. It is contemplated that if a vehicle were present that blocked the lane-change, the system 10 would notify the operator 18 and/or the system 10 would take whatever action is necessary to prevent the lane-change.

While the center-lane is indicated as the second-lane 42, the lane-change could include moving the host-vehicle into the far-left-lane of the roadway 26 if there were reason to do so. For example, there may be other-vehicles to pass in both the right-lane and the center-lane. It is also contemplated that if the center-lane were the preferred lane and the host-vehicle was traveling in the center-lane of the roadway 26, the lane-change could be to the right-lane from the center-lane of the roadway 26 if there were a reason to do so such as an accident blocking the left-lane and the center-lane of the roadway 26.

Referring now to Fig. 3, the controller 30 may be further programmed or configured to initiate a lane-change to the first-lane 40 from the second-lane 42 after a first-time-interval 44, e.g. twenty-five-seconds (25 s) after the lane-change to the second-lane 42 that was initiated by the operator 18 when the first-lane 40 is available for unimpeded travel by the host-vehicle 12 for greater than a second-time-interval 46, e.g. two minutes (2 min). This avoids unnecessarily brief lane-changed by the host-vehicle 12 into and out of the preferred-lane (e.g. the first-lane 40) if there are numerous instances of the other-vehicle 22 spaced apart in the preferred-lane. However, it is contemplated that the controller 30 may ignore the test for unimpeded travel by the host-vehicle 12 for greater than the second-time-interval 46 if the host-vehicle 12 is being approached from the rear by a passing-vehicle (not shown), especially if the roadway being traveled is a two-lane roadway rather than the three-lane version of the roadway 26 shown in Figs. 2 and 3. That is, the second-time-interval 46 may be preemptively cancelled if the host-vehicle 12 is impeding a passing-vehicle.

It is recognized that the configuration or programming of the controller 30 may differ from what the operator 18 personally prefers. Also, the operator 18 may have personal/historical knowledge about traffic flow patterns on a frequently traveled road that may suggest when a preemptive or anticipatory lane-change may be advisable. As such, the controller 30 may be programmed or configured to maintain position in a lane that was selected by the operator 18 in certain situations. For example, the controller 30 may be further configured to remain in the second-lane 42 after the first-time-interval 44 expires when a roadway-divergence 48, e.g. an exit ramp or a fork in the roadway 26, is located within a predefined-distance 50 of the host-vehicle 12 and until the roadway-divergence 48 is passed by the host-vehicle 12. The presence of the roadway-divergence 48 may be detected by object-detector 28 or indicated on digital-map 52 accessible by the controller 30.

Another recognized situation where the configuration or programming of the controller 30 may differ from what the operator 18 personally prefers is when the controller 30 tries to return to the preferred lane after all of the various time-intervals have expired. If the controller 30 tries to initiate a lane-change to the preferred-lane, the operator 18 may take action to prevent that lane change. The operator 18 may be made aware of the controller preparing to make a lane change by a graphical-display in the host-vehicle 12 indicating that a lane-change is about to be initiated by the controller 30, or the controller may activate a turn-signal-indicator of the host-vehicle 12. That is, the controller 30 may be further configured to remain in the second-lane 42 for a third-time-interval 54 when the operator 18 overrides the lane-change to the first-lane 40 from the second-lane 42 that was initiated by the controller 30.

It follows that the controller 30 may be further configured to remain in the second-lane 42 after the third-time-interval 54 expires when a roadway-divergence 48 (e.g. exit ramp or fork in roadway 26) is located (e.g. detected by the object-detector 28 or indicated on digital-map 52) within a predefined-distance 50 of the host-vehicle 12 and until the roadway-divergence 48 is passed by the host-vehicle 12.

Returning to Fig. 2, it is recognized that a situation may arise where the host-vehicle is traveling in the first-lane 40, which could have been selected as the preferred-lane by the operator 18. Even though the other-vehicle 22 is presently traveling slower than the host-vehicle 12, the operator 18 for a number of possible reasons may want to stay in the first-lane 40. For example, the operator 18 may have personal/historical knowledge about traffic flow patterns on a frequently traveled road that may suggest that slowing the host-vehicle 12 to follow the other-vehicle 22 is preferable to changing lanes to pass the other-vehicle 22. That is, the controller 30 may be further configured to initiate a lane-change to the second-lane 42 when an instance of the objects 20 (e.g. the other-vehicle 22) is detected by the object-detector 28 in the first-lane 40 that warrants a lane-change, but the remain in the first-lane 40 for a fourth-time-interval 56 when the operator 18 overrides the lane-change to the second-lane 42 that was initiated by the controller 30. As suggested above, that the controller 30 is preparing or has initiated a lane change may be indicated on a display viewable by the operator 18, and the operator 18 may override that lane-change with, for example, a voice-command or actuation of a tactile input. Of course, in this situation the host-vehicle 12 would reduce speed to maintain a safe following distance behind the other-vehicle 22.

It follows, as suggested above, the controller may be further configured to remain in the first-lane 40 after the fourth-time-interval 56 when a roadway-divergence 48 (exit ramp or fork in roadway 26) is located (detected by object-detector 28 or indicated on digital-map 52) within a predefined-distance 50 of the host-vehicle 12 and until the roadway-divergence 48 is passed by the host-vehicle 12.

Accordingly, a lane-keeping system (the system 10), a controller 30 for the system 10, and a method of operating the system 10 is provided. The system 10 and corresponding method provide for various time-intervals that controller 30 uses to better operate the host-vehicle 12 in accordance with the desires of the operator 18.

While this invention has been described in terms of the preferred embodiments thereof, it is not intended to be so limited, but rather only to the extent set forth in the claims that follow.

## Claims

1. A lane-keeping system (10) for an automated vehicle, said system (10) comprising:
a lane-detector (24) that indicates which lane of a roadway (26) is occupied by a host-vehicle (12);
an object-detector (28) that detects objects (20) proximate to the host-vehicle (12); and
a controller (30) in communication with the lane-detector (24) and the object-detector (28), said controller (30) configured to operate the host-vehicle (12) to
follow a first-lane (40) using the lane-detector (24) when no object is detected by the object-detector (28) in the first-lane (40) that warrants a lane-change, and no lane-change from the first-lane (40) is initiated by an operator (18) of the host-vehicle (12),
allow a lane-change to a second-lane (42) when initiated by the operator (18),
initiate a lane-change to the first-lane (40) from the second-lane (42) after a first-time-interval (44) after the lane-change to the second-lane (42) that was initiated by the operator (18) when the first-lane (40) is available for unimpeded travel by the host-vehicle (12) for greater than a second-time-interval (46).

2. The system (10) in accordance with claim 1, wherein the controller (30) is further configured to
remain in the second-lane (42) after the first-time-interval (44) when a roadway-divergence (48) is located within a predefined-distance (50) of the host-vehicle (12) and until the roadway-divergence (48) is passed by the host-vehicle (12).

3. The system (10) according to any one of the preceding claims, wherein the controller (30) is further configured to
remain in the second-lane (42) for a third-time-interval (54) when the operator (18) overrides the lane-change to the first-lane (40) from the second-lane (42) that was initiated by the controller (30).

4. The system (10) in accordance with claim 3, wherein the controller (30) is further configured to
remain in the second-lane (42) after the third-time-interval (54) when a roadway-divergence (48) is located within a predefined-distance (50) of the host-vehicle (12) and until the roadway-divergence (48) is passed by the host-vehicle (12).

5. The system (10) according to any one of the preceding claims, wherein the controller (30) is further configured to
initiate a lane-change to the second-lane (42) when an object is detected by the object-detector (28) in the first-lane (40) that warrants a lane-change,
and remain in the first-lane (40) for a fourth-time-interval (56) when the operator (18) overrides the lane-change to the second-lane (42) that was initiated by the controller (30).

6. The system (10) in accordance with claim 5, wherein the controller (30) is further configured to
remain in the first-lane (40) after the fourth-time-interval (56) when a roadway-divergence (48) is located within a predefined-distance (50) of the host-vehicle (12) and until the roadway-divergence (48) is passed by the host-vehicle (12).
